# FASCICULE DE BREVET EUROPEEN

(11) **EP 1 908 980 B1**
(45) Date de publication et mention de la délivrance du brevet: **03.08.2011**
(21) Numéro de dépôt: 07116412.3
(22) Date de dépôt: 14.09.2007
(51) Int. Cl.: F16D 41/07, F16D 41/06

(54) **Dispositif de poulie débrayable**
Vorrichtung mit ausrückbarer Riemenscheibe
Disconnectable pulley device

(30) Priorité: 04.10.2006 FR 0654082
(43) Date de publication de la demande: 09.04.2008
(73) Titulaire: Aktiebolaget SKF, 415 50 Göteborg (SE)
(72) Inventeur: Gardelle, Jean-Luc, 37230 Luynes (FR); Claude, Francis, 37540 Saint Cyr sur Loire (FR); Arnault, Benoît, 37540 Saint Cyr Sur Loire (FR)
(74) Mandataire: Casalonga, Axel

(56) Documents cités:
- EP-A- 1 491 786
- EP-A1- 0 306 761
- FR-A1- 2 856 759
- JP-A- 2005 282 856

## Description

La présente invention concerne le domaine des roues libres.

Plus particulièrement, la présente invention concerne le domaine des poulies débrayables équipées de roues libres utilisées par exemple dans les poulies d'entraînement des alternateurs dans un véhicule automobile.

De telles poulies débrayables sont connues en elles-mêmes et sont de plus en plus utilisées pour remédier aux effets néfastes des acyclismes ou décélérations soudaines du moteur qui surviennent dans les moteurs à explosion, en particulier à bas régime et surtout dans les moteurs Diesel.

En effet, une courroie d'entraînement, qui est reliée au moteur par l'intermédiaire d'une poulie de vilebrequin, peut décélérer brutalement alors qu'une poulie menée, par exemple une poulie de l'alternateur, a tendance, par inertie, à continuer à tourner à la même vitesse.

Dans le cas d'un accouplement rigide entre la poulie de vilebrequin et l'arbre d'alternateur, la courroie est soumise à des contraintes très importantes lors de ces variations de vitesse instantanées.

De telles variations génèrent des effets néfastes tels qu'une fatigue anormale de la courroie avec des risques de rupture, un glissement de celle-ci sur la poulie, ou encore une vibration des brins de courroie entre les poulies.

Afin d'atténuer ces phénomènes, il a été incorporé, entre la poulie menée et l'arbre mené, une roue libre qui permet de désaccoupler temporairement la poulie de l'arbre en cas de décélération brutale de ladite poulie.

Une telle poulie débrayable est connue notamment par le document JP 2005-282856 et comporte généralement deux roulements disposés de chaque côté de la poulie, et une roue libre montée entre les deux roulements et pourvue d'une pluralité de cames de coincement et d'une cage comportant une pluralité de fenêtres pour le logement desdites cames.

Afin de limiter l'usure de ces cames, ce document prévoit de fixer la cage de maintien sur l'arbre mené afin d'entraîner la cage et l'arbre à la même vitesse angulaire. De cette façon, lorsque la poulie est en position débrayée dans laquelle elle fonctionne en roue libre, il se produit un glissement uniquement entre les cames et un chemin de glissement situé à l'intérieur de la poulie qui est correctement lubrifié de par la force centrifuge qui tend à projeter le lubrifiant vers l'extérieur.

Toutefois, avec une telle poulie, la cage n'a aucun degré de liberté angulaire par rapport à l'arbre mené. La demanderesse s'est aperçu que cela peut nuire à la sûreté de fonctionnement de la roue libre notamment en provoquant des risques d'interférences entre les cames et les bords des fenêtres de la cage de maintien lors du basculement des cames.

On connaît également, par le document FR-A-2 856 759, une poulie débrayable pourvue de deux cages de maintien des cames de coincement coaxiales dans laquelle la cage intérieure comporte des éléments de friction venant en contact avec l'arbre mené. La cage extérieure comporte quant à elle des éléments de friction réalisés sous la forme de clips en contact avec la poulie.

Dans une position débrayée ou en roue libre, le couple de frottement entre les éléments de friction et la poulie a tendance à freiner la cage intérieure par rapport à la cage extérieure. Les bords de fenêtres ménagées sur la cage intérieure viennent alors en contact contre les cames de coincement, ce qui provoque leur basculement. Ainsi, les cames ne sont plus en contact avec l'arbre mené.

Un tel dispositif présente l'inconvénient d'utiliser deux cages de maintien dont l'une est pourvue d'éléments de friction qui sont réalisés sous forme de clips, ce qui augmente le prix de revient du dispositif.

Par ailleurs, lors d'un fonctionnement en roue libre, les cames n'étant plus en contact avec l'arbre mené, le dispositif peut manquer, pour certaines applications, de réactivité pour passer rapidement d'un fonctionnement en roue libre vers un fonctionnement en prise de couple. Ceci est notamment le cas pour une application sur un alternateur dans laquelle les acyclismes se traduisent par des variations extrêmement rapides de la vitesse de rotation du moteur.

Au vu de ce qui précède, la présente invention a donc pour but de remédier aux inconvénients précités.

La présente invention a notamment pour but de prévoir une poulie débrayable dans laquelle il serait possible de passer de manière plus rapide d'une position en roue libre à une position en prise de couple, et inversement.

La présente invention a encore pour but de prévoir une poulie débrayable qui comprend des composants économiques à fabriquer et à assembler.

La présente invention a enfin pour but de prévoir une poulie débrayable présentant une bonne sûreté de fonctionnement.

Le dispositif de poulie débrayable comprend une poulie montée sur un élément intérieur de transmission, et une roue libre pourvue d'une pluralité d'éléments de coincement, tels que des cames, montés entre un chemin de glissement de la poulie et un chemin de glissement de l'élément intérieur de transmission. Ladite roue libre est destinée à assurer un embrayage unidirectionnel entre la poulie et l'élément intérieur de transmission.

Le dispositif est pourvu d'une cage pour les éléments de coincement, d'au moins un élément de friction annulaire prévu entre la cage et le chemin de glissement de l'élément intérieur de transmission pour relier par friction la cage et l'élément intérieur de transmission, et d'au moins un élément de rappel élastique disposé entre au moins un élément de coincement et la cage, l'élément de rappel élastique tendant à maintenir les éléments de coincement en contact avec les chemins de glissement lors d'une position embrayée et lors d'une position débrayée de la roue libre.

En d'autres termes, l'élément de rappel élastique est disposé entre l'élément de coincement et la cage qui est entraînée par l'élément intérieur de transmission, grâce à l'élément de friction.

En effet, la demanderesse a déterminé que la disposition relative de l'élément de rappel élastique et de la cage permet notamment de tendre à maintenir un contact permanent entre les chemins de glissement du dispositif dans la position embrayée et dans la position débrayée. L'existence de l'élément de friction d'une part, et la disposition de l'élément de rappel élastique sur la cage d'autre part, permet de tendre à conserver un contact permanent sans glissement entre les éléments de coincement et l'élément de transmission intérieur.

Ainsi, la coopération de l'élément de rappel élastique, de la cage et de l'élément de friction permet d'accroître la fiabilité de fonctionnement de la poulie.

L'élément de friction annulaire prévu entre la cage et le chemin de glissement de l'élément intérieur de transmission tend à entraîner la roue libre par l'intermédiaire de ladite cage à la même vitesse que l'élément intérieur de transmission tant qu'un couple de traînée dû au frottement des éléments de coincement sur le chemin de glissement de la poulie est inférieur au couple de friction entre l'élément de friction et la pièce sur laquelle celui-ci est destiné à venir frotter, i.e. la cage ou l'élément intérieur de transmission.

Dans ces conditions, on limite le glissement relatif entre le chemin de glissement ménagé sur l'élément intérieur de transmission et les éléments de coincement. Ainsi, le glissement se produit essentiellement entre les éléments de coincement et le chemin de glissement de la poulie qui est parfaitement lubrifié par centrifugation. Les glissements génèrent alors un couple de traînée faible et une usure minime des éléments de coincement.

L'accouplement par friction entre la cage et l'élément intérieur de transmission peut par ailleurs permettre à la cage de tourner légèrement par rapport à l'élément intérieur, par exemple dans le cas ou les éléments de coincement viendraient forcer contre les bords d'alvéoles ou fenêtres, lors de leur basculement. En effet, dans ces conditions, les éléments de coincement ont tendance à entraîner en rotation la cage qui peut se déplacer angulairement par rapport à l'élément intérieur de transmission. On évite ainsi le blocage des éléments de coincement par la cage, ou encore une détérioration de ladite cage. Ceci favorise encore un bon fonctionnement de la roue libre.

L'élément de friction annulaire est distinct de l'élément de rappel élastique associé à au moins un des éléments de coincement.

En outre, l'utilisation d'un élément de friction permet de pouvoir prévoir, sur la pièce destinée à être entraînée, une surface de contact sensiblement plane et dépourvue d'éléments en saillie formant dents d'engrènement nécessitant un réglage lors du montage.

Avantageusement, la poulie comprend une seule cage pour les éléments de coincement. De préférence, la cage est monobloc. La roue libre est dépourvue d'une cage supplémentaire de rayon différent à celui de la cage et susceptible de faire basculer les cames de la position embrayée.

Dans un mode de réalisation, l'élément de friction est circonférentiellement continu.

Avantageusement, l'élément intérieur de transmission tend à entraîner la roue libre sensiblement à la même vitesse, par l'intermédiaire de l'élément de friction et la cage.

Dans un mode de réalisation, l'élément de friction annulaire est monté sur la cage.

Dans un mode de réalisation, au moins un élément de rappel élastique est disposé entre chaque élément de coincement et la cage.

De préférence, l'élément de rappel élastique est disposé radialement entre la cage et l'élément intérieur de transmission.

Dans un mode de réalisation, la roue libre comprend des cames engageantes.

Dans un mode de réalisation, le chemin de glissement de l'élément de transmission intérieur pour les éléments de coincement est formé directement par une surface extérieure dudit élément intérieur de transmission.

Dans un mode de réalisation, le chemin de glissement de la poulie pour les éléments de coincement est formé directement par un alésage de ladite poulie.

L'élément de friction annulaire peut comprendre une zone élastique radialement vers une surface extérieure de l'élément intérieur de transmission.

Dans un mode de réalisation, l'élément de friction annulaire est disposé sur une portion radiale de la cage.

Dans un autre mode de réalisation, l'élément de friction annulaire est disposé sur une portion axiale de la cage.

Dans un mode de réalisation, l'élément de friction annulaire comprend un corps de friction et un anneau de serrage du corps en contact de friction. En variante, l'élément de friction annulaire peut comprendre une lèvre de friction supportée par une zone élastique radialement. Dans un autre mode de réalisation, l'élément de friction est constitué d'un corps de friction.

L'élément de friction peut être rapporté sur la cage. L'élément de friction est distinct de la cage. Il est également possible de prévoir l'élément de friction et la cage monoblocs.

Dans un mode de réalisation, le dispositif comprend au moins deux roulements, la roue libre étant disposée axialement entre les roulements.

Le dispositif de poulie débrayable peut être monté sur un arbre d'alternateur en vue de l'entraînement dudit alternateur. La poulie peut être montée sur un arbre central notamment par l'intermédiaire d'une roue libre. L'arbre d'entraînement peut être monté sur l'arbre de l'alternateur. Une courroie d'entraînement entraînée par le moteur peut venir porter sur une périphérie de la poulie.

Grâce à la roue libre, la poulie entraîne l'arbre central lorsque le moteur accélère ou est en régime sensiblement continu ou bien décélère très lentement. En cas de ralentissement brutal du moteur et donc de la poulie, l'axe central du dispositif de poulie débrayable peut continuer à tourner plus rapidement que la poulie proprement dite grâce à la roue libre, épargnant ainsi des contraintes excessives à la courroie d'entraînement.

Grâce à l'invention, on tend à maintenir les éléments de coincement en contact permanent avec les chemins de glissement lors d'une position embrayée et lors d'une position débrayée de la roue libre, ce qui permet notamment de passer de manière quasiment instantanée d'une position en roue libre à une position en prise de couple, et inversement. L'invention permet également et de limiter l'usure des éléments de coincement qui glissent principalement sur la piste extérieure de la poulie qui parfaitement lubrifiée lors de la rotation du dispositif.

La présente invention sera mieux comprise à la lecture de la description détaillée de quelques modes de réalisation pris à titre d'exemples nullement limitatifs et illustrés par les dessins annexés, sur lesquels :
- la figure 1 est une demie-vue en coupe d'un dispositif de poulie débrayable selon un premier mode de réalisation;
- la figure 2 est une demie-vue en coupe axiale selon II-II de la figure 1 ;
- la figure 3 est une demie-vue en coupe axiale d'un dispositif de poulie débrayable selon un deuxième mode de réalisation, et
- la figure 4 est une demie-vue en coupe axiale d'un dispositif de poulie débrayable selon un troisième mode de réalisation.

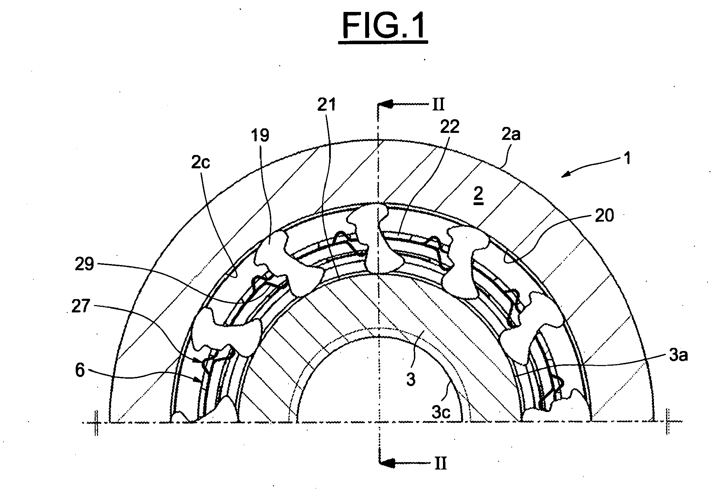

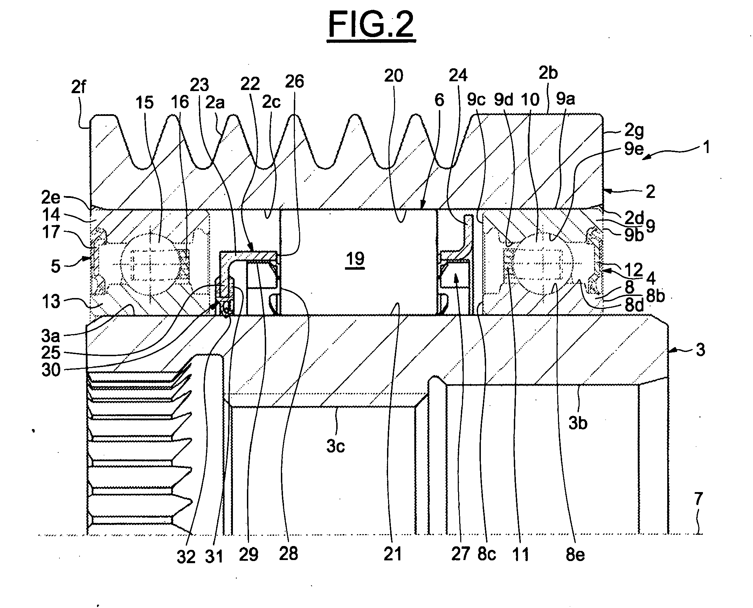

Comme on peut le voir sur les figures 1 et 2, le dispositif 1 de poulie débrayable comprend une poulie 2, un élément intérieur de transmission 3, par exemple un arbre creux, deux paliers à roulement 4 et 5, ainsi qu'une roue libre 6.

La poulie 2, d'axe 7, présente une surface extérieure pourvue d'une zone rainurée 2a à rainures annulaires et une zone axiale 2b formée à une extrémité axiale de la zone rainurée 2a. La poulie 2 comprend un alésage cylindrique 2c s'étendant sur l'ensemble de la longueur de la poulie 2, à l'exception de chanfreins 2d et 2e disposés chacun à une extrémité axiale, et deux surfaces frontales radiales 2f et 2g.

L'élément intérieur de transmission 3, qui se présente sous la forme d'un arbre creux, possède une surface extérieure axiale 3a cylindrique sur laquelle est prévu, à chacune des extrémités axiales, un chanfrein (non référencé). L'élément intérieur de transmission 3 présente également un alésage 3b dont une partie 3c comporte un filetage en vue de la fixation sur l'extrémité d'un arbre d'alternateur et de l'entraînement dudit arbre (non représenté).

Le roulement 4, coaxial avec l'axe 7, comprend une bague intérieure 8, une bague extérieure 9, entre lesquelles sont logés une rangée d'éléments roulants 10 réalisés ici sous forme de billes, une cage 11 de maintien de l'espace circonférentiel des éléments roulants 10, et un joint d'étanchéité 12.

La bague intérieure 8 comprend un alésage 8a de forme cylindrique, emmanché avec la surface extérieure 3a de l'élément intérieur de transmission 3, et délimité par deux surfaces latérales radiales 8b et 8c opposées, et une surface cylindrique extérieure 8d étagée à partir de laquelle est formée une gorge circulaire 8e présentant en section droite un profil interne concave apte à former un chemin de roulement pour les éléments roulants 10, ladite gorge étant orientée vers l'extérieur.

La bague extérieure 9 comprend une surface cylindrique extérieure 9a emmanchée dans l'alésage 2c de la poulie 2 et délimitée par des surfaces frontales 9b et 9c, et un alésage 9d étagé de forme cylindrique à partir duquel est formée une gorge circulaire 9e présentant en section droite un profil interne concave apte à former un chemin de roulement pour les éléments roulants 10 orienté vers l'intérieur. L'alésage 9d comprend ici deux rainures annulaires (non référencées) symétriques entre elles par rapport à un plan passant par le centre des éléments roulants 10. A l'intérieur de la rainure annulaire située du côté extérieur du roulement 4 est monté le joint d'étanchéité 12 qui vient frotter contre la surface extérieure cylindrique 8d de la bague intérieure 8 pour former étanchéité. Le joint d'étanchéité 12 est disposé radialement entre les bagues intérieure et extérieure 8, 9, et monté axialement entre les éléments roulants 10 et les surfaces radiales 8b et 9b des bagues 8 et 9. Lesdites surfaces affleurent axialement avec la surface frontale radiale 2g de la poulie 2.

De manière analogue, le roulement 5, coaxial avec l'axe 7, comprend une bague intérieure 13 emmanché avec la surface extérieure 3a de l'élément intérieur de transmission 3, une bague extérieure 14 emmanchée dans l'alésage 2c de la poulie 2, entre lesquelles sont logés une rangée d'éléments roulants 15 réalisés ici sous forme de billes, une cage 16 de maintien de l'espace circonférentiel des éléments roulants 15, et un joint d'étanchéité 17 métallique. Le roulement 5 est identique au roulement 4, et est disposé de façon symétrique par rapport à celui-ci en considérant un plan radial passant par le centre de la poulie 2. Le roulement 5 affleure ainsi axialement avec la surface frontale radiale 2f de la poulie 2.

Les roulements 4 et 5 sont donc disposés à chaque extrémité axiale de la poulie 2, la roue libre 6 étant montée axialement entre eux. La roue libre 6 bénéficie ainsi d'une protection contre l'intrusion des éléments étrangers par l'intermédiaire des roulements 4 et 5, et notamment des joints d'étanchéité 12 et 17.

La roue libre 6 comprend une pluralité d'éléments de coincement ou cames 19 disposées entre deux chemins de glissement 20 et 21, de forme cylindrique de révolution. Les cames 19 sont de type « engageantes », c'est-à-dire ayant tendance, sous l'effet des forces centrifuges lors de la rotation de la roue libre, à basculer dans le sens favorisant leur blocage entre les deux chemins de glissement 20 et 21, en vue de faciliter un passage quasi instantané du fonctionnement en roue libre au fonctionnement en prise de couple.

Le chemin de glissement 20 est formé par l'alésage 2c de la poulie 2. Le chemin de glissement 21 est formé par la surface extérieure axiale 3a de l'arbre 3.

En d'autres termes, la poulie 2 peut être fabriquée avec une surface intérieure de forme particulièrement simple entièrement axiale à l'exception des chanfreins 2d et 2e d'extrémité. La poulie 2 peut donc être obtenue à faible prix de revient. Cette surface intérieure constitue une portée extérieure pour les cames 19, ou de grand diamètre.

Du côté opposé, le chemin de glissement 21 est formé sur la surface extérieure 3a de l'arbre 3. Le profil extérieur de révolution de l'arbre 3 possède le même diamètre sur toute sa longueur. La finition peut être effectuée en une seule opération sur une machine de rectification et permet d'obtenir en grande série et à faible coût le chemin de glissement 21 de petit diamètre, ou portée intérieure, pour les cames 19 de la roue libre 6.

La roue libre 6 comprend également une cage 22 de forme générale annulaire pouvant être réalisée dans une matière métallique, notamment en acier, ou encore à partir d'une matière synthétique tel que du polyamide.

La cage 22 comprend une portion axiale 23 et deux portions radiales 24, 25. La portion radiale 24 prolonge radialement vers l'extérieur une extrémité axiale de la portion 23 située au voisinage du roulement 4, tandis que la portion radiale 25 prolonge radialement vers l'intérieur une extrémité axiale de la portion 23 située au voisinage du roulement 5. Les extrémités libres des portions radiales 24 et 25 sont situées à proximité de l'alésage 2c de la poulie 2 et de la surface extérieure 3a de l'élément intérieur de transmission 3, respectivement. En d'autres termes, la portion radiale 24 reste à distance de l'alésage 2c, la portion radiale 25 restant quant à elle à distance de la surface extérieure 3a.

La cage 22 comprend également une pluralité de fenêtres 26 ménagées dans la portion axiale 23 et formant un logement pour les cames 19. Les fenêtres 26 sont régulièrement espacées l'une par rapport à l'autre dans le sens circonférentiel. La cage 22 permet un maintien circonférentiel des cames 19 à espacement régulier.

La roue libre 6 comporte en outre un ressort 27 qui est réalisé sous la forme d'une bande métallique annulaire enroulée sur elle-même et raccordée bout à bout ou avec recouvrement partiel. Le ressort 27 est monté à l'intérieur de la cage 22, et plus particulièrement disposé radialement entre la surface extérieure 3a de l'élément de transmission 3 et la portion axiale 23 de la cage 22. Le ressort 27 est situé axialement entre les portions radiales 24 et 25 de la cage 22.

Le ressort 27 comporte également des alvéoles ou fenêtres 28 qui correspondent à celles de la cage 22 pour pouvoir monter les cames 19. Ainsi, les fenêtres 28 sont circonférentiellement régulièrement espacées.

Le ressort 27 est encore pourvu d'au moins un élément de rappel 29 élastique par came 19 réalisé sous la forme d'une languette, et prévu pour appuyer sur une surface ménagée à cet effet sur la came 19 associée afin d'exercer un couple de basculement tendant à maintenir les cames 19 en contact avec les chemins de glissement 20 et 21. Dans une position statique, les éléments de rappel 29 exercent un effort dirigé vers la poulie 2.

En variante, un élément de rappel individuel associé à chaque came exerce un effort tendant à maintenir un contact permanent avec les chemins de glissement 20 et 21. I1 est par exemple possible de monter pour chacune des cames 19 un ressort de rappel élastique disposé entre la came 19 et la cage 22.

Pour relier par friction la cage 22 et l'élément intérieur 3 de transmission, la roue libre 6 comporte également un élément de friction 30 annulaire prévu entre la cage 22 et la surface extérieure 3a de l'élément intérieur 3. L'élément de friction 30 est ici rapporté sur la cage 22. Toutefois, en variante, un élément de friction 30 est monté sur la surface extérieure 3a de l'élément intérieur 3 de transmission.

L'élément de friction 30 annulaire comporte un corps de friction 31 et un anneau de serrage 32 élastique du corps entourant une portion du corps en contact de friction avec l'élément intérieur 3 de transmission.

Le corps de friction 31 annulaire est réalisé en matière synthétique, par exemple en élastomère. I1 est pourvu d'une portion radiale (non référencée) fixée à l'extrémité libre de la portion radiale 25 de la cage 22, d'une première portion oblique (non référencée) prolongeant vers l'intérieur la portion radiale en direction de l'élément de transmission 3 et des cames 19, et d'une seconde portion oblique (non référencée) prolongeant vers l'extérieur un bord de petit diamètre de la première portion oblique. Une surface intérieure de la zone de jonction des première et seconde portions obliques vient en contact de friction contre la surface extérieure 3a de l'élément de transmission 3. Le corps de friction 31 peut avantageusement être surmoulé directement sur la portion radiale 25 de la cage 22 de manière à obtenir un ensemble unitaire, et présente un coefficient de friction élevé de manière à pouvoir entraîner en rotation l'élément de transmission 3.

L'anneau de serrage 32 élastique est réalisé en matière métallique. I1 est monté en appui contre une surface extérieure de ladite zone de jonction des première et seconde portions obliques. I1 forme un ressort et est apte à pré-contraindre radialement le corps de friction 31, sur la surface extérieure 3a de l'élément intérieur de transmission 3 afin de maintenir en contact ces deux éléments et de rattraper les usures.

Le mode de fonctionnement de la roue libre 6 est le suivant. Lors d'un régime stabilisé ou lors d'une accélération de la poulie 2, les cames 19 ont tendance, sous l'effet des forces centrifuges et par contact avec les chemins de glissement 20 et 21, à basculer dans un premier sens qui permet d'obtenir par arc-boutement entre les deux chemins de glissement un blocage avec les deux chemins de glissement 20 et 21 de la poulie 2 et de l'élément intérieur 3 de transmission. La roue libre 6 fonctionne en prise de couple ou embrayée et transmet un couple d'entraînement entre la poulie 2 et l'élément intérieur 3.

Au contraire, lors d'une décélération rapide de la poulie 2, les cames 19 ont tendance à basculer dans un second sens opposé au premier, ce qui provoque le déblocage ou décoincement des cames 19. La roue libre 6 ne transmet alors plus de couple et permet temporairement un déplacement relatif en rotation de la poulie 2 par rapport à l'élément de transmission 3 intérieur. La roue libre 6 assure ainsi un accouplement unidirectionnel entre la poulie 2 et l'élément de transmission 3.

Dans cette position débrayée, les éléments de rappel 29 élastique disposés entre l'unique cage 22 et les cames 19 ont tendance à maintenir un contact glissant entre le chemin de glissement 20 de la poulie 2 parfaitement lubrifié et lesdites cames 19. Lors de l'état transitoire entre le passage de la position embrayée à la position débrayée, ou inversement, la demanderesse a déterminé que la disposition relative des éléments de rappel 29 élastique et de la cage 22 permet de maintenir efficacement le contact entre les cames 19 et les chemins de glissement 20, 21.

Dans la position débrayée, l'élément de friction 30 annulaire prévu entre la cage 22 et le chemin 21 de glissement de l'élément intérieur 3 de transmission tend à entraîner en rotation par friction la roue libre 6 par l'intermédiaire de ladite cage à la même vitesse que l'élément intérieur 3 de transmission. Ainsi, l'élément intérieur 3 de transmission et la cage 22 sont solidaires en rotation et on supprime ou limite ainsi le glissement relatif entre le chemin 21 de glissement ménagé sur l'élément intérieur 3 de transmission et les cames 19. Les cames 19 et l'élément intérieur 3 de transmission sont en contact mais avec un glissement relatif faible ou nul.

Cet entraînement en rotation est effectif tant qu'un couple de traînée dû au frottement des cames 19 sur le chemin de glissement 20 de la poulie 2 est inférieur au couple de friction entre l'élément de friction 30 et la surface extérieure 3a de l'élément intérieur 3 de transmission. Dans ce cas, il existe alors un glissement avec contact entre les cames 19 et le chemin de glissement 21. Dans le cas d'une éventuelle usure du corps de friction 31 par frottement avec ladite surface extérieure 3a, l'anneau de serrage 32 élastique permet de déformer radialement vers l'intérieur la zone de jonction des portions obliques afin de maintenir un contact de friction entre l'élément 30 et l'élément intérieur 3 de transmission. En d'autres termes, l'anneau de serrage 32 permet d'obtenir un élément de friction à rattrapage d'usure.

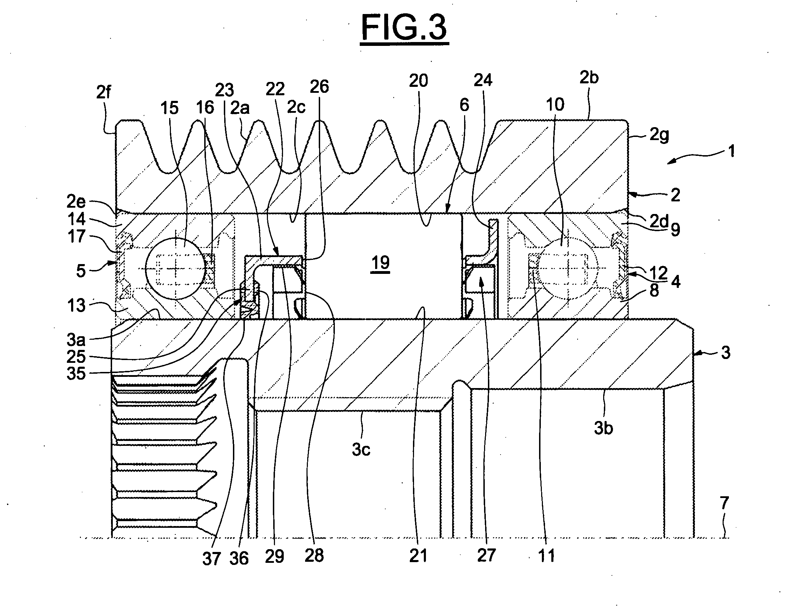

Le mode de réalisation illustré sur la figure 3 diffère en ce que la roue libre 6 est pourvue d'un élément de friction 35 annulaire comportant un corps 36 pourvu d'une zone radialement élastique et d'une lèvre 37 en contact de friction avec l'élément intérieur 3 de transmission. L'élément de friction 35, en une seule pièce, est réalisé en matière synthétique, par exemple en polyamide ou en élastomère.

La zone radialement élastique comprend ici une première portion axiale (non référencée) annulaire fixée sur la portion radiale 25 de la cage 22, qui est prolongée vers l'intérieur par une première portion oblique s'étendant vers l'intérieur en direction du ressort 27, elle-même prolongée à un bord de petit diamètre par une seconde portion oblique s'étendant vers l'intérieur en direction du roulement 5.

Le corps 36 forme ainsi une ligne brisée à angles alternativement rentrant et saillant offrant une grande élasticité radiale et permettant un rattrapage d'une éventuelle usure de fonctionnement de la lèvre 37. Ladite lèvre 37 est reliée à la seconde portion oblique du corps 36. La lèvre 37 s'étend axialement le long de la surface extérieure 3a de l'élément intérieur 3 de transmission et est en contact de friction contre ladite surface. Elle présente un coefficient de friction élevé de manière à pouvoir entraîner en rotation l'élément de transmission 3. La lèvre 37 est en contact de friction avec ladite surface extérieure 3a.

Dans ce mode de réalisation, la cage 22 peut être réalisée dans une matière métallique, notamment en acier, ou encore à partir d'une matière synthétique tel que du polyamide. En variante, la cage 22 de logement et l'élément de friction 35 sont venus de matière et obtenus par moulage d'une matière synthétique tel que du polyamide, notamment du PA 4-6.

Dans une autre variante de réalisation, un élément de friction 35 est monté sur la surface extérieure 3a de l'élément intérieur 3 de transmission et vient en contact de friction avec la cage 22.

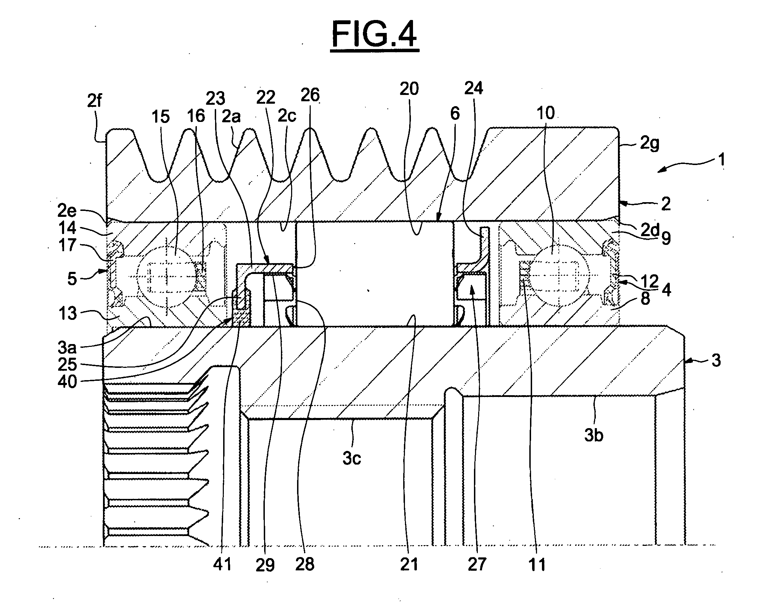

Le mode de réalisation illustré sur la figure 4 diffère en ce que la roue libre 6 est pourvue d'un élément de friction 40 annulaire constitué par un corps 41. Le corps 41 est avantageusement réalisé en matière synthétique, par exemple en polyamide, et surmoulé sur la portion radiale 25 de la cage 22. Le corps 41 de forme générale annulaire comprend un alésage en contact de friction contre la surface extérieure 3a de l'élément de transmission 3. I1 présente un coefficient de friction élevé de manière à pouvoir entraîner en rotation l'élément de transmission 3. En variante, un élément de friction 40 est monté sur la surface extérieure 3a de l'élément intérieur 3 de transmission et vient en contact de friction avec la cage 22.

Dans une application sur une poulie d'entraînement d'un alternateur pour véhicule automobile, grâce à la roue libre, la poulie entraîne l'arbre central lorsque le moteur accélère ou est en régime sensiblement continu ou bien décélère très lentement. En cas de ralentissement brutal du moteur et donc de la poulie, l'axe central du dispositif de poulie débrayable peut continuer à tourner plus rapidement que la poulie proprement dite grâce à la roue libre, épargnant ainsi des contraintes excessives à la courroie d'entraînement. En outre, la roue libre permet un passage quasi instantané du fonctionnement en roue libre au fonctionnement en prise de couple, et présente une bonne fiabilité dans le temps.

## Revendications

1. Dispositif de poulie débrayable comprenant une poulie (2) montée sur un élément intérieur de transmission (3), et une roue libre (6) pourvue d'une pluralité d'éléments de coincement montés entre un chemin de glissement (20) de la poulie et un chemin de glissement (21) de l'élément intérieur de transmission, ladite roue libre étant destinée à assurer un embrayage unidirectionnel entre la poulie (2) et l'élément intérieur de transmission (3), où le dispositif de poulie débrayable est pourvu d'une cage (22) pour les éléments de coincement, d'au moins un élément de friction (30 ; 35 ; 40) annulaire prévu entre la cage (22) et le chemin de glissement (21) de l'élément intérieur de transmission pour relier par friction la cage et ledit élément intérieur, et d'au moins un élément de rappel (29) élastique disposé entre au moins un élément de coincement et la cage, l'élément de rappel (29) élastique tendant à maintenir les éléments de coincement en-contact avec les chemins de glissement (20, 21) lors d'une position embrayée et lors d'une position débrayée de la roue libre.

2. Dispositif selon la revendication 1, comprenant une seule cage (22) pour les éléments de coincement.

3. Dispositif selon la revendication 1 ou 2, dans lequel, dans une position débrayée, l'élément intérieur (3) de transmission tend à entraîner la roue libre (6) sensiblement à la même vitesse, par l'intermédiaire de l'élément de friction (30 ; 35 ; 40) et la cage (22).

4. Dispositif selon l'une quelconque des revendications précédentes, dans lequel l'élément de friction (30 ; 35 ; 40) annulaire est monté sur la cage (22).

5. Dispositif selon l'une quelconque des revendications précédentes, comprenant au moins un élément de rappel (29) élastique disposé entre chaque élément de coincement et la cage.

6. Dispositif selon l'une quelconque des revendications précédentes, dans lequel l'élément de rappel (29) élastique est disposé radialement entre la cage et l'élément intérieur de transmission.

7. Dispositif selon l'une quelconque des revendications précédentes, dans lequel l'élément de friction (30 ; 35 ; 40) annulaire est disposé sur une portion radiale de la cage (22).

8. Dispositif selon l'une quelconque des revendications précédentes, dans lequel l'élément de friction (30 ; 35 ; 40) comprend une zone élastique radialement vers une surface extérieure de l'élément intérieur de transmission (3).

9. Dispositif selon l'une quelconque des revendications précédentes, dans lequel l'élément de friction (30) comprend un corps de friction (31) et un anneau de serrage (32) du corps en contact de friction.

10. Dispositif selon l'une quelconque des revendications 1 à 8, dans lequel l'élément de friction (35) annulaire comprend une lèvre. (37) de friction supportée par une zone élastique radialement.

11. Dispositif selon l'une quelconque des revendications 1 à 8, dans lequel l'élément de friction (40) est constitué d'un corps (41) de friction.

12. Alternateur comportant un arbre et un dispositif de poulie débrayable suivant l'une quelconque des revendications précédentes, monté sur ledit arbre.

## Claims

1. Disengageable pulley device comprising a pulley (2) mounted on an inner transmission element (3), and a freewheel (6) provided with a plurality of lock-up elements (9) mounted between a sliding track (20) of the pulley and a sliding track (21) of the inner transmission element, the said freewheel being intended to provide a one-way coupling between the pulley (2) and the inner transmission element (3), where the diengageable pulley device is provided with a cage (22) for the lock-up elements, with at least one annular friction element (30; 35; 40) provided between the cage (22) and the sliding track (21) of the inner transmission element to use friction to connect the cage and the said inner element, and with at least one elastic return element (29) positioned between at least one lock-up element and the cage, the elastic return element (29) tending to keep the lock-up elements in contact with the sliding tracks (20, 21) when the freewheel is in the coupled position and in the uncoupled position.

2. Device according to Claim 1, comprising a single cage (22) for the lock-up elements.

3. Device according to Claim 1 or 2, in which, in an uncoupled position, the inner transmission element (3) tends to drive the freewheel (6) substantially at the same speed, via the friction element (30; 35; 40) and the cage (22).

4. Device according to any one of the preceding claims, in which the annular friction element (30; 35; 40) is mounted on the cage (22).

5. Device according to any one of the preceding claims, comprising at least one elastic return element (29) positioned between each lock-up element and the cage.

6. Device according to any one of the preceding claims, in which the elastic return element (29) is positioned radially between the cage and the inner transmission element.

7. Device according to any one of the preceding claims, in which the annular friction element (30; 35; 40) is positioned on a radial portion of the cage (22).

8. Device according to any one of the preceding claims, in which the friction element (30; 35; 40) comprises a region that is elastic radially towards an exterior surface of the inner transmission element (3).

9. Device according to any one of the preceding claims, in which the friction element (30) comprises a friction body (31) and a clamping ring (32) for the body in frictional contact.

10. Device according to any one of Claims 1 to 8, in which the annular friction element (35) comprises a friction lip (37) supported by a radially elastic region.

11. Device according to any one of Claims 1 to 8, in which the friction element (40) consists of a friction body (41).

12. Alternator comprising a shaft and a disengageable pulley device according to any one of the preceding claims, mounted on the said shaft.

## Patentansprüche

1. Ausrückbare Riemenscheibenvorrichtung, die eine auf ein inneres Übertragungselement (3) montierte Riemenscheibe (2) und ein Freilaufrad (6) enthält, das mit mehreren Klemmelementen versehen ist, die zwischen einen Gleitweg (20) der Riemenscheibe und einen Gleitweg (21) des inneren Übertragungselements montiert sind, wobei das Freilaufrad dazu bestimmt ist, ein unidirektionales Einrücken zwischen der Riemenscheibe (2) und dem inneren Übertragungselement (3) zu gewährleisten, wobei die ausrückbare Riemenscheibenvorrichtung mit einem Käfig (22) für die Klemmelemente, mit mindestens einem ringförmigen Reibungselement (30; 35; 40), das zwischen dem Käfig (22) und dem Gleitweg (21) des inneren Übertragungselements vorgesehen ist, um durch Reibung den Käfig und das innere Element zu verbinden, und mit mindestens einem elastischen Rückstellelement (29) versehen ist, das zwischen mindestens einem Klemmelement und dem Käfig angeordnet ist, wobei das elastische Rückstellelement (29) dahin tendiert, die Klemmelemente mit den Gleitwegen (20, 21) in einer eingerückten Stellung und in einer ausgerückten Stellung des Feilaufrads in Kontakt zu halten.

2. Vorrichtung nach Anspruch 1, die einen einzigen Käfig (22) für die Klemmelemente aufweist.

3. Vorrichtung nach Anspruch 1 oder 2, bei der in einer ausgerückten Stellung das innere Übertragungselement (3) dahin tendiert, das Feilaufrad (6) mittels des Reibungselements (30; 35; 40) und des Käfigs (22) im Wesentlichen mit gleicher Geschwindigkeit anzutreiben.

4. Vorrichtung nach einem der vorhergehenden Ansprüche, bei der das ringförmige Reibungselement (30; 35; 40) auf den Käfig (22) montiert ist.

5. Vorrichtung nach einem der vorhergehenden Ansprüche, die mindestens ein elastisches Rückstellelement (29) enthält, das zwischen jedem Klemmelement und dem Käfig angeordnet ist.

6. Vorrichtung nach einem der vorhergehenden Ansprüche, bei der das elastische Rückstellelement (29) radial zwischen dem Käfig und dem inneren Übertragungselement angeordnet ist.

7. Vorrichtung nach einem der vorhergehenden Ansprüche, bei der das ringförmige Reibungselement (30; 35; 40) auf einem radialen Abschnitt des Käfigs (22) angeordnet ist.

8. Vorrichtung nach einem der vorhergehenden Ansprüche, bei der das Reibungselement (30; 35; 40) eine elastische Zone radial in Richtung einer Außenfläche des inneren Übertragungselements (3) enthält.

9. Vorrichtung nach einem der vorhergehenden Ansprüche, bei der das Reibungselement (30) einen Reibungskörper (31) und einen Klemmring (32) des Körpers in Reibungskontakt enthält.

10. Vorrichtung nach einem der Ansprüche 1 bis 8, bei der das ringförmige Reibungselement (35) eine Reibungslippe (37) enthält, die von einer radial elastischen Zone getragen wird.

11. Vorrichtung nach einem der Ansprüche 1 bis 8, bei der das Reibungselement (40) aus einem Reibungskörper (41) besteht.

12. Wechselstromgenerator, der eine Welle und eine ausrückbare Riemenscheibenvorrichtung nach einem der vorhergehenden Ansprüche aufweist, die auf die Welle montiert ist.
